# EUROPÄISCHE PATENTSCHRIFT

(11) **EP 1 014 042 B1**
(45) Veröffentlichungstag und Bekanntmachung des Hinweises auf die Patenterteilung: **30.10.2002**
(21) Anmeldenummer: 99125074.7
(22) Anmeldetag: 16.12.1999
(51) Int. Cl.: G01D 5/244, B23Q 17/24, G01D 5/347

(54) **Taktlineal oder Taktscheibe und Verfahren zu seiner Herstellung**
Timing block or disc and method for its production
Règle ou disque générateur de cadence et procédé de sa fabrication

(30) Priorität: 23.12.1998 DE 19860106
(43) Veröffentlichungstag der Anmeldung: 28.06.2000
(73) Patentinhaber: PWB-Ruhlatec Industrieprodukte GmbH, 99846 Seebach (DE)
(72) Erfinder: Braun,Paul-Wilhelm, 53842 Troisdorf (DE); Rückert, Jochen, 99846 Seebach (DE)
(74) Vertreter: Müller-Wolff, Thomas, Dipl.-Ing.

(56) Entgegenhaltungen:
- EP-A- 0 385 418
- CH-A- 681 742
- DE-A- 4 429 892
- DE-A- 19 650 690
- DE-U- 29 504 883

## Beschreibung

Die Erfindung betrifft ein Taktlineal oder eine Taktscheibe für die genaue Positionierung von Arbeitsmaschinen, Servomotoren, Encoder o. dgl., bestehend aus einem transparenten Material, auf dem Codierungen zur Abtastung über optische Sensoren angeordnet sind sowie ein Verfahren zu seiner Herstellung.

Taktlineale oder Taktscheiben der eingangs genannten Art sind aus der DE 295 04 883 U1 bekannt. Die Taktscheiben werden in der Regel auf einer rotierenden Achse, z. B. eines Encoders befestigt. Ein Lichtstrahl erzeugt im Durchlichtverfahren bei der Rotation der Scheibe Impulse. Dabei liegt die Lichtquelle parallel zur Rotationsachse und sendet einen Lichtstrahl rechtwinklig auf die Scheibe.

Durch die auf der codierten Taktscheibe vorgegebene Reihenfolge: lichtdurchlässig/lichtundurchlässig entstehen auf der rotierenden Scheibe "Fenster"-Öffnungen bestimmter Breite und Länge, die zur Erzeugung von Impulsen benutzt werden. Der aus einer Lichtquelle (Sender) austretende Lichtstrahl wird von einem in der optischen Achse des Lichtstrahls liegenden Empfänger (optischer Sensor) in einen Impuls umgewandelt, wobei die Genauigkeit des Impulses von der Beschaffenheit der "Fenster" abhängt.

Die eingangs genannten Taktscheiben oder Taktlineale haben sich in der Praxis bewährt. In bestimmten Anwendungsfällen, z. B. in feuchter Atmosphäre oder bei Temperaturen oberhalb 100°C sind jedoch bisweilen Probleme aufgetreten. Unter diesen Bedingungen kann nämlich der Film delaminieren und/oder erweichen, so daß die Genauigkeit der Messung leidet.

Andererseits sind Taktscheiben oder Taktlineale aus Glas, Metall oder temperaturbeständigem Kunststoff hergestellt worden. Derartige Taktscheiben sind jedoch von der Materialseite und vom Herstellungsverfahren teuer und bieten auch nicht die erforderliche Genauigkeit, die beispielsweise im Anwendungsbereich von Encodern zu den Standardvoraussetzungen gehören.

Aus der EP-A-0 385 418 ist ein feuchtigkeitsgeschützter Maßstab bekannt, der aus einem Trägermaterial aus Glas mit einem aufgeklebten Hologrammfilm besteht. Um die Beständigkeit dieses Aufbaus gegen Feuchtigkeitseinflüsse weiter zu verbessern, wird der Hologrammfilm in einen Kleber eingebettet, der aus einem feuchtigkeitsresistenten Material besteht.

Aufgabe der vorliegenden Erfindung ist es daher, eine Taktscheibe oder ein Taktlineal der eingangs genannten Art derart weiterzubilden, daß sie auch in feuchter Atmosphäre und insbesonder bei Temperaturen über 100°C ohne Einschränkungen eingesetzt werden können. Dabei soll auf den Einsatz teurer Materialien verzichtet werden und das Herstellungsverfahren für Massenprodukte mit Stückzahlen über 100.000 pro Tag geeignet sein.

Diese Aufgabe wird erfindungsgemäß durch die in den Patentansprüchen angegebenen Merkmale gelöst. Es hat sich gezeigt, daß durch die Abdeckung des belichteten und entwickelten Filmmaterials mit einer Folie und wahlweisen Versiegelung der Ränder ein unter den genannten Bedingungen temperatur- und feuchtigkeitsstabiles Taktlineal/Taktscheibe hergestellt werden kann. Bei dem als Basis des Taktlineals/Taktscheibe dienenden Filmmaterial handelt es sich um Standardfilmmaterial mit einer Photoschicht, die vorzugsweise einseitig eine reflektierende Beschichtung aufweist. Wenn Sender und Empfänger - also Lichtquelle und optischer Sensor - zu einem Chip vereinigt sind, können sie als Baugruppe auf einer Seite des Taktlineals oder der Taktscheibe angeordnet werden. Durch die geringen Schichtdicken kann eine Streuung und Beugung der Lichtstrahlen verringert und Interferenzerscheinigungen vermieden werden.

Sowohl die Metallschicht als auch die transparente, lichtempfindliche Schicht wird vorzugsweise mit einer Schutzschicht überzogen. Die Schutzschicht kann aus einer auflaminierten Folie bestehen, die aus Kunststoff beispielsweise Polypropylen oder Polyethylen besteht. Dadurch verbessert sich die Stabilität der Taktscheibe erheblich.

Vorteilhafterweise sind die Ränder des Taktlineals oder der Taktscheibe versiegelt. Dies wird im folgenden anhand mehrerer Ausführungsbeispiele näher erläutert.

Es zeigen:
- Figur 1: prinzipieller Aufbau eines erfindungsgemäßen Taktlineals/Taktscheibe,
- Figur 2: Versiegelung bei einer Taktscheibe gemäß vorliegender Erfindung,
- Figur 3: erfindungsgemäßes Taklineal mit seitlicher Versiegelung,
- Figur 4: erfindungsgemäße Taktscheibe mit einem Sender/Empfänger in Draufsicht.

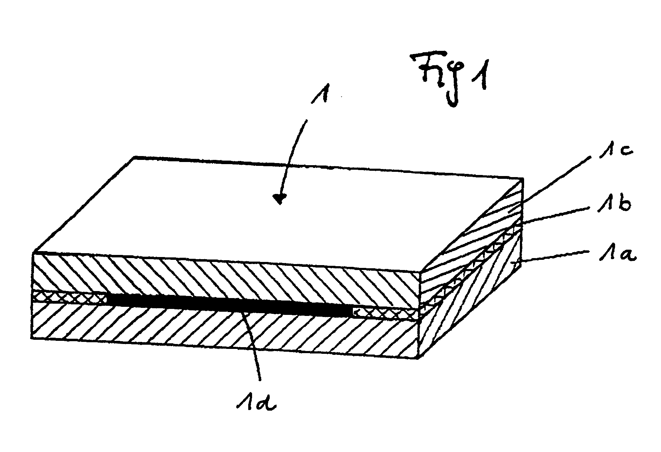

In Figur 1 ist die Taktscheibe mit 1 bezeichnet. Sie besteht aus einem Filmmaterial 1a, einer Photoemulsionsschicht 1b und einer auflaminierten Folie 1c.

Nach der Belichtung und Entwicklung sind die Codemarkierungen 1d als Schwarzfärbung erkennbar.

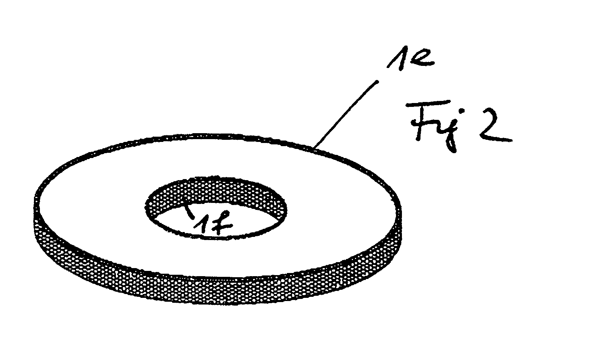

In Figur 2 ist eine aus dem Taktscheibenmaterial gemäß Figur 1 vereinzelte, bzw. ausgestanzte Taktscheibe als Ringkörper dargestellt. Sie trägt am äußeren Umfang le eine Versiegelung und vorzugsweise auch eine Versiegelung zur Abdeckung der Wandung 1f der Ringbohrung. Die Versiegelung kann auch mit einem Heißlack allein oder zusammen mit einem anderen Kleber auf die Schnittstellen aufgebracht werden.

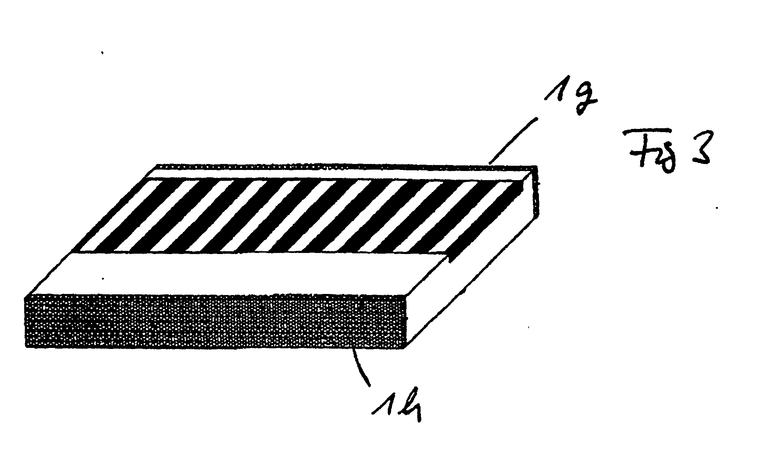

In Figur 3 ist ein Taktlinealabschnitt dargestellt, wobei die Schnittkanten 1g, 1h mit einer Versiegelung gegen Feuchtigkeit abgedichtet sind. Ziel dieser Versiegelung ist es, die lichtempfindliche Schicht gegen Feuchtigkeitseinflüsse zu schützen. Selbstverständlich können auch metallische Schichten gegen einen Korrosionsangriff durch die Versiegelung geschützt werden.

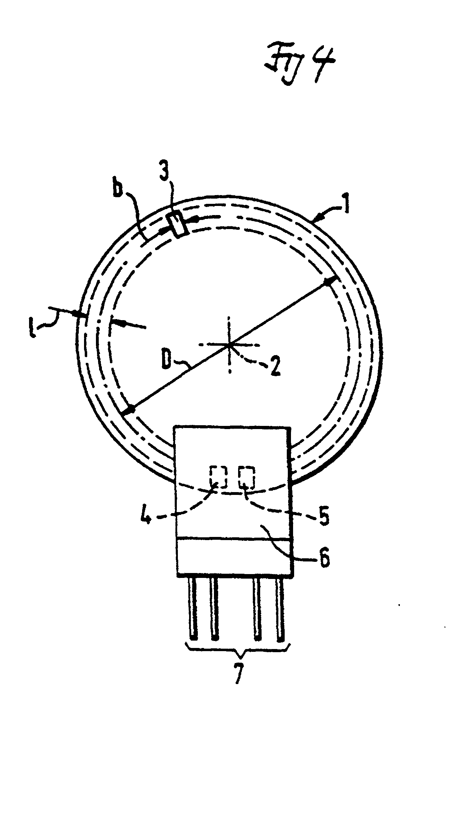

Figur 4 zeigt den prinzipiellen Aufbau einer Taktscheibe als Bauteil eines Encoders. Die Taktscheibe 1 trägt einen Durchmesser D (optischer Durchmesser) und dreht sich um eine Rotationsachse 2. An ihrem äußeren Umfang sind Schlitze, bzw. Codemarkierungen 3 angeordnet, die eine Schlitzlänge l und eine Schlitzbreite b aufweisen.

Gemäß dem in Figur 1 dargestellten Ausführungsbeispiel ist das als Trägermaterial eingesetzte Filmaterial 1a mit der Photooder Gelatineschicht 1b direkt verbunden. Auf zusätzliche Klebematerialien wird ausdrücklich verzichtet.

Am äußeren Rand der Taktscheibe l sitzen jeweils ein Sender 4 und ein Empfänger 5, die auf einer gemeinsamen Baueinheit 6 angeordnet sind. Über Leitungen 7 sind Sender und Empfänger mit einem Regelkreis (nicht dargestellt) verbunden.

Wenn auf dem Filmmaterial 1a eine reflektierende Schicht zusätzlich angeordnet ist, werden die aus dem Sender 4 emittierten Lichtstrahlen nur an den Durchlaßspalten der Photoschicht - also zwischen den Schlitzen der Maske - reflektiert und vom Empfänger 5 registriert, der einen Impuls über die Leitung 7 an den Regelkreis abgibt.

Zur Vermeidung von kleinsten Signaldifferenzen ist es erforderlich, daß eine Ungleichmäßigkeit der Taktscheibe oder des Taktlineals vermieden wird. Dies kann auch bei Beugungserscheinungen des vom Sender 6 emittierten Lichtstrahls auftreten. Deshalb ist es vorteilhaft, wenn der Abstand zwischen den vom Lichtstrahl nach der Reflektion durchquerten Schichten minimiert wird. Somit ist die Dicke der Folie lc vorzugsweise geringer als das Filmmaterial 1a. Zum Auftragen von metallisch hochreflektierenden Schichten mit einem Reflektionsgrad von > 90° können sogenannte "Dünnschichtverfahren" verwendet werden, die beispielsweise durch die Sputtertechnik realisierbar sind. Anhand von Versuchen wurde festgestellt, daß bei einer Lichtquelle die Lichtquellen mit ca. 700 nm Lichtwellenlänge aussendet, Metallschichten aus Kupfer, Aluminium, Chrom und Silber mit Vorteil angewendet werden können. Die Anordnung der reflektierenden Schicht ist in DE 44 29 892 A1 beschrieben.

Das erfindungsgemäße Verfahren ermöglicht die Herstellung von Massenprodukten mit hoher Auflösung. Es weist ferner den Vorteil einer hohen Prozeßsicherheit auf, da bei der Herstellung der Taktscheiben Filmmaterial mit gleichbleibenden Eigenschaften verwendet wird.

## Patentansprüche

1. Taktlineal oder Taktscheibe für die genaue Positionierung von Arbeitsmaschinen, Servomotoren, Encoder o. dgl., bestehend aus einem transparenten Material, auf dem Codierungen zur Abtastung über optische Sensoren angeordnet sind,
wobei
das transparente Material (1a) aus einem Film besteht, der auf einer Seite eine lichtempfindliche Schicht (1b) trägt,
die lichtempfindliche Schicht (1b) über Masken oder Photoplotter mit Codierungen zur Herstellung von Fenstern versehen ist,
die lichtempfindliche Schicht (1b) mit einem transparenten, temperatur- und feuchtigkeitsbeständigen Material (1c) abgedeckt ist,
das Taktlineal oder die Taktscheibe Schnittkanten aufweist, welche aus dem Vereinzeln der Taktscheibe oder des Taktlineals aus dem belichteten und beschichteten Filmmaterial resultieren und
die Schnittkanten des Taktlineals oder der Taktscheibe versiegelt sind.

2. Taktlineal oder Taktscheibe nach Anspruch 1,
**dadurch gekennzeichnet,**
**daß** eine reflektierende Schicht auf der dem Sender (6) abgewandten Seite des Taktlineals angeordnet ist.

3. Taktlineal oder Taktscheibe nach einem der vorhergehenden Ansprüche,
**dadurch gekennzeichnet,**
**daß** die reflektierende Schicht als Metallschicht im Dünnschichtverfahren aufgetragen ist.

4. Taktlineal oder Taktscheibe nach einem der vorhergehenden Ansprüche,
**dadurch gekennzeichnet,**
**daß** die Metallschicht aus Kupfer, Aluminium, Chrom oder Silber besteht.

5. Taktlineal oder Taktscheibe nach einem der vorhergehenden Ansprüche,
**dadurch gekennzeichnet,**
**daß** die Metallschicht eine weitere Schutzschicht gegen mechanische Beschädigung trägt.

6. Taktlineal oder Taktscheibe nach einem der vorhergehenden Ansprüche,
**dadurch gekennzeichnet,**
**daß** das temperatur- und feuchtigkeitsbeständige Material aus einer Kunststoffolie besteht.

7. Verfahren zur Herstellung eines Taktlineals oder einer Taktscheibegemäß einem der vorhergehenden Ansprüche,
**dadurch gekennzeichnet,**
**daß** die lichtempfindliche Schicht (9) über Masken, Photoplotter oder andere abbildende Verfahren mit Codierungen belichtet und anschließend entwickelt wird,
**daß** auf die entwickelte Schicht eine Folie auflaminiert wird,
**daß** die Taktscheiben oder Taktlineale aus dem belichteten und beschichteten Filmmaterial vereinzelt werden und
**daß** die Schnittkanten der vereinzelten Taktscheiben oder Taktlineale versiegelt werden.

8. Verfahren nach einem der vorhergehenden Ansprüche,
**dadurch gekennzeichnet,**
**daß** der belichtete und entwickelte Film im Dünnschichtverfahren mit einer reflektierenden Schicht versehen wird.

## Claims

1. A timing rule or a timing disk for accurately positioning of machines and machine tools, servomotors, encoders and the like, consisting of a transparent material carrying encoding patterns for being scanned by optical sensors,
wherein the transparent material (1a) is made of a film carrying a light-sensitive layer (1b on one side,
the light-sensitive layer (1b) being encoded by means of templates or photo plotters in order to produce windows on it,
the light-sensitive layer (1b) being covered with a transparent, temperature-resistant and humidity-resistant material (1c),
the timing rule or timing disk comprises cut edges resulting from cutting out the individual timing disks or the timing rules from the exposed and coated film material and
wherein the cut edges of the timing rule or timing disk are sealed.

2. The timing rule or timing disk according to Claim 1,
**characterized in that** a reflective layer is disposed on the side of the timing rule which is facing away from the transmitter (6).

3. The timing rule or timing disk according to any of the preceding claims,
**characterized in that** the reflective layer is a metallic layer applied in a thin-film process.

4. The timing rule or timing disk according to any of the preceding claims,
**characterized in that** the metallic layer is made of either copper, aluminium, chromium or silver.

5. The timing rule or timing disk according to any of the preceding claims,
**characterized in that** the metallic layer carries another protective coating for protection against mechanical damage.

6. The timing rule or timing disk according to any of the preceding claims,
**characterized in that** the temperature-resistant and humidity resistant material is made of a plastic foil.

7. A method for the manufacture of a timing rule or a timing disk according to any of the preceding claims,
**characterized in that** the encoding pattern is provided on the light-sensitive layer (9) by means of templates, photo plotters or other imaging methods by exposure and subsequent developing,
that a foil is applied onto the developed layer by lamination,
that the timing disks or timing rules are cut out of the exposed and coated film material and
that the cut edges of the individual timing disks or timing rules are sealed.

8. The method according to any of the preceding claims,
**characterized in that** the exposed and developed film is provided with a reflective layer in a thin-film process.

## Revendications

1. Règle de synchronisation ou disque de synchronisation pour le positionnement précis de machines de travail, de servomoteurs, de codeurs ou analogues, constitué par un matériau transparent, sur lequel sont disposés des codes destinés à être explorés au moyen de capteurs optiques, dans lequel
le matériau transparent (1a) est formé d'un film, qui porte, sur une face, une couche photosensible (1b),
la couche photosensible (1b) est pourvue de codes, par l'intermédiaire de masque ou de traceurs photosensibles, pour la fabrication de fenêtres,
la couche photosensible (1b) est recouverte par un matériau transparent (1c), qui résiste à la température et à l'humidité,
la règle de synchronisation ou le disque de synchronisation comporte des bords de coupe, qui résultent de la séparation du disque de synchronisation ou de la règle de synchronisation à partir d'un matériau de film exposé et recouvert, et les bords de coupe de la règle de synchronisation ou du disque de synchronisation sont scellés.

2. Règle de synchronisation ou disque de synchronisation selon la revendication 1, **caractérisé en ce qu'**une couche réfléchissante est disposée sur le face de la règle de synchronisation, qui est tournée à l'opposé de l'émetteur (6).

3. Règle de synchronisation ou disque de synchronisation selon l'une des revendications précédentes, **caractérisé en ce que** la couche réfléchissante est appliquée en tant que couche métallique dans le procédé à couches minces.

4. Règle de synchronisation ou disque de synchronisation selon l'une des revendications précédentes, **caractérisé en ce que** la couche métallique est formée de cuivre, d'aluminium, de chrome ou d'argent.

5. Règle de synchronisation ou disque de synchronisation selon l'une des revendications précédentes, **caractérisé en ce que** la couche métallique porte une autre couche de protection vis-à-vis d'un endommagement mécanique.

6. Règle de synchronisation ou disque de synchronisation selon l'une des revendications précédentes, **caractérisé en ce que** le matériau résistant à la température et à l'humidité est formé d'une feuille de matière plastique.

7. Procédé pour fabriquer une règle de synchronisation ou un disque de synchronisation selon l'une des revendications précédentes, **caractérisé en ce**
**qu'**on expose la couche photosensible (9) par l'intermédiaire de masques, de traceurs photosensibles ou d'autres systèmes de formation d'images, avec des codes et qu'on la développe ensuite,
**qu'**on applique une feuille sur la couche développée,
**qu'**on sépare les disques de synchronisation ou les règles de synchronisation à partir du matériau du film exposé et recouvert, et
**qu'**on scelle les bords de coupe des différents disques de synchronisation ou règles de synchronisation, individualisés.

8. Procédé selon l'une des revendications précédentes, **caractérisé en ce qu'**on équipe le film exposé et développé, selon le procédé à couches minces, d'une couche réfléchissante.
